# EUROPÄISCHE PATENTSCHRIFT

(11) **EP 2 052 780 B1**
(45) Veröffentlichungstag und Bekanntmachung des Hinweises auf die Patenterteilung: **05.06.2013**
(21) Anmeldenummer: 08018639.8
(22) Anmeldetag: 24.10.2008
(51) Int. Cl.: B03B 9/04, C04B 18/06

(54) **Verfahren zur Schlackenaufbereitung**
Method for the treatment of slag
Procédé destiné au traitement de scories

(30) Priorität: 26.10.2007 DE 102007051728; 26.10.2007 DE 102007051727; 16.01.2008 DE 102008004477
(43) Veröffentlichungstag der Anmeldung: 29.04.2009
(73) Patentinhaber: Scherer & Kohl GmbH & Co. KG, 67071 Ludwigshafen (DE)
(72) Erfinder: Scherer, Gerhard, 67071 Ludwigshafen (DE)
(74) Vertreter: Straub, Bernd

(56) Entgegenhaltungen:
- EP-A2- 1 749 804
- DE-A1- 10 306 132
- DE-B4- 19 758 658
- DE-C1- 4 123 277

## Beschreibung

Die nachfolgende Erfindung bezieht sich auf ein Verfahren zur Schlackenaufbereitung, insbesondere zurAufbereitung von Schlacke aus Mcillverbrennungs- und Biomasseverbrennungsanlagen.

### STAND DER TECHNIK

Schlacken aus Müllverbrennungsanlagen stellen ein Gemisch verschiedener Materialien dar, deren Zusammensetzung von Parametern wie der Beaufschlagung der Müllverbrennungsanlage, dem Typus der Verbrennungsanlage und ihrer Betriebsweise sowie den Verbrennungsbedingungen abhängen. Dazu gehören die Größe der zu verbrennenden Materialien und etwaige Vorbehandlungen, die Verbrennungstemperatur und die Verweildauer in der Verbrennungsanlage.

Die in den Müllverbrennungsanlagen entstehenden Schlacken werden klassifiziert und somit in weiterverwertbare und nicht weiterverwertbare Substanzen unterteilt; wobei gemäß dem Abfallschlüssel 190111 der Abfallverbrennungsverordnung (AVV) als sogenannte gefährliche Stoffe bezeichneten Schlacken nicht weiterverwendet werden, wohingegen die weiteren Schlacken nach einer entsprechenden Aufarbeitung weiterverarbeitet werden können.

Ein Verfahren und eine Vorrichtung zur Aufbereitung von Müllverbrennungsschlacken ist aus der DE 41 23 277 C1 bekannt. Dort wird die Aufbereitung der Schlacken mittels der Prozessstufen Klassierung, Zerkleinerung und Magnetabscheidung zur Abtrennung grober Störstoffe und eisenhaltiger Bestandteile und der Trennung in marktgängige Körnungen offenbart. Da die so vorgenommene Aufbereitung hinsichtlich der Erzeugung verwertbarer Stoffe unzureichend ist und ein Schadstoffpotenzial insbesondere hinsichtlich der Wassergefährdung darstellt, werden ein Verfahren und eine Vorrichtung beschrieben, die eine verbesserte Trennung von Wertstoffen und Schadstoffen ermöglicht.

Eine weitere Aufbereitung von Schlacken ist aus der DE 103 06 132 A1 bekannt. Diese Aufbereitung betrifft Schlacken aus Abfallverbrennungsanlagen, wobei die frische Rohschlacke zunächst bewässert und anschließend einer Magnetabscheidung unterzogen wird. Das erhaltene Zwischenprodukt wird über ein Sink-Schwimmverfahren nach Korngrößen klassiert.

Ferner beschreibt die DE 197 58 658 ein Verfahren zur Herstellung von Splitt aus Bauschutt und Schlacke. Hierbei wird gealterte Schlacke zusammen mit Bauschutt verarbeitet. Die Verarbeitung umfasst die Bereitstellung einer Körnungsgröße von 0 bis 8 mm, die zur Verwendung als Splitt im Straßenbau geeignet ist.

In der DE 197 27 172 C2 ist ein Verfahren zur mechanischen Aufbereitung gealterter Schlacke und deren Verwendung zur Herstellung von Sekundärbaustoffen beschrieben. Nach mechanischer Aufarbeitung gealterter Schlacke wird Bauschutt aufgegeben, Eisenschrott abgetrennt und trocken klassiert. Der Trockenaufarbeitung folgt eine Nassaufarbeitung.

Die Herstellung von verfestigten Produkten für die Bauindustrie ist aus der DE 100 21 792 C2 bekannt. Die mineralischen Abfälle werden zur Verbesserung ihrer Qualität für den gewünschten Verwendungszweck nach einer trockenen Vorbereitung ebenfalls nass weiter verarbeitet, sodass miteinander verbackene Partikel unterschiedlicher Zusammensetzung desagglomeriert und zerklüftete Schlackenpartikel geringer Kornfestigkeit in kleinere, festere Körner getrennt werden sowie raue Kornoberflächen durch Abreiben von hervorstehenden Graten und Kanten abgerundet werden.

Schließlich beschreibt die DE 102 06 834 A1 eine Anlage und ein Verfahren für die Behandlung von metallhaltigem Haufwerk, wobei eine Anlage für die Behandlung metallhaltiger Verbundstoffe mit einer Prallmühle und einem vorgeschalteten Metallabscheider bereit gestellt wird, sowie einer Verwirbelungseinrichtung, ferner mit einer Siebstation zur Zurückgewinnung von Eisen- und Nichteisenmetallen, wobei nach der Abtrennung der metallhaltigen Komponenten das nichtmagnetische Material einer weiteren Zerkleinerung durch eine Prallmühle unterzogen wird. Das weiter zerkleinerte Gut wird insbesondere weiterer Trockentrennung durch Sieben unterzogen. Durch die verfeinerte Auftrennung der eisen- und nichteisenhaltigen Metalle wird zielgerichtet eine weitere Verwendung der nichteisenhaltigen Metalle, die Chrom und Nickel enthalten können, ermöglicht.

Aus der Vielzahl der vorgenannten Verfahren ergibt sich ein weiter bestehendes Erfordernis nach verbesserter Auftrennung der einzelnen Komponenten unter ökologischen sowie ökonomischen Aspekten.

### OFFENBARUNG

Ausgehend von diesem Stand der Technik liegt der vorliegenden Erfindung die Aufgabe zu Grunde, ein verbessertes Verfahren zur Bereitstellung von als Sekundärbaustoffe geeigneten Materialien aus Müllverbrennungsschlacken bereitzustellen. Diese Aufgabe wird durch ein Verfahren mit den Merkmalen des unabhängigen Anspruchs 1 gelöst. Weiterbildungen des Verfahrens werden in den Unteransprüchen beschrieben.

Eine weitere Aufgabe ist es, einen kostengünstigen wiederverwerteten, chemisch inerten Sekundärbaustoff bereitzustellen.

Eine erste Ausführungsform des Verfahren zur Aufbereitung von Verbrennungsschlacken umfasst zunächst einen Schritt a) der Bereitstellung eines Verbrennungsschlackenstoffstromes, gefolgt von einem Schritt b) der Trockenaufarbeitung der Verbrennungsschlacke. Die Trockenaufarbeitung umfasst eine Abtrennung von Eisen-Metallkomponenten und eine Abtrennung von Störstoffen, wobei die Metallkomponenten und die Störstoffe getrennt voneinander aus dem Verbrennungsschlackenstoffstrom abgetrennt werden, und weiterhin ein Vorklassieren des verbliebenen Verbrennungsschlackenstoffstromes in zumindest zwei Fraktionen an Schlackenpartikeln unterschiedlicher Korngrößen. In einem Schritt c) werden die zumindest zwei Fraktionen getrennt voneinander aufgearbeitet, indem als Schritt c1) eine kleinere der beiden Fraktionen unmittelbar einer weiteren Klassierung in zumindest zwei Fraktionen an Schlackenpartikeln unterschiedlicher Korngrößen unterzogen wird, und eine hieraus resultierende Fraktion größerer Körnung einer Abtrennung von Eisen-Metallkomponenten und einer nachfolgenden Abtrennung von Nicht-Eisen-Metallkomponenten unterzogen wird. In einem Schritt c2) wird eine größere der beiden Fraktionen einer Abtrennung von Eisen-Metallkomponenten und einer nachfolgenden Abtrennung von Nicht-Eisen-Metallkomponenten unterzogen.

Als nächste Schritte zur Aufbereitung von Verbrennungsschlacken erfolgen ein Klassieren des verbliebenen Verbrennungsschlackenstoffstromes aus den Schritten c1) und c2) in zumindest zwei Fraktionen an Schlackenpartikeln unterschiedlicher Korngrößen (Schritt d) und in einem Schritt e) eine Aufarbeitung der zumindest zwei Fraktionen aus Schritt d) getrennt voneinander, wobei die Aufarbeitung hierbei eine Schrittfolge umfasst, in der in einem Schritt e1) eine Abtrennung von Eisen-Metallkomponenten erfolgt, in einem Schritt e2) eine Nachzerkleinerung des nach der vorstehenden Abtrennung von Eisen-Metallkomponenten verbleibenden Verbrennungsschlackenstoffstromes durchgeführt wird, hierauf erneut in einem Schritt e3) eine Abtrennung von Eisen-Metallkomponenten erfolgt und in einem Schritt e4) eine Abtrennung von Störstoffen und/oder Abtrennung von Nicht-Eisen-Metallkomponenten durchgeführt wird.

Schritt f) des Aufbereitungsverfahrens umfasst eine Nassaufbereitung des aus Schritt e4) verbleibenden Verbrennungsschlackenstoffstroms, wobei der Stoffstrom in ein Gefäß überführt wird. Die Nassaufbereitung umfassteine Schrittfolge beginnend mit einem Schritt f1), in dem der Verbrennungsschlackenstoffstrom mit unter Druck stehendem Wasser beaufschlagt wird. Als nächstes erfolgt in einem Schritt f2) ein Abtrennen von Störstoffen und ein Nassklassieren des Verbrennungsschlackenstoffstroms in zumindest zwei Fraktionen an Schlackenpartikeln unterschiedlicher Korngrößen. Als Schritt f3) folgt ein getrennt voneinander Unterziehen der zwei Fraktionen an Schlackenpartikeln einem Hydroabscheideverfahren zur Abtrennung von Störstoffen, an den sich ein Schritt f4) des Nassklassierens der beiden Fraktionen an Schlackenpartikeln getrennt voneinander anschließt, wobei aus einer kleineren der beiden Fraktionen zumindest zwei Fraktionen Sand unterschiedlicher Korngrößen abgetrennt werden und wobei aus einer größeren der beiden Fraktionen zumindest drei, vorzugsweise vier Fraktionen an Schlackenpartikeln abgetrennt werden.

Besonders vorteilhaft werden hierbei zwei Fraktionen Sande und vier Fraktionen an Splitt und Schotter erhalten, die nahezu frei von Metallen und Störstoffen sind, so dass sie vorteilhaft im Bau- und Straßenbauwesen eingesetzt werden können.

In einer weiteren Ausführungsform umfasst das Verfahren zur Aufbereitung von Verbrennungsschlacken ein Klassieren des nach Schritt e3) verbleibenden Verbrennungsschlackenstoffstroms in zumindest zwei Fraktionen an Schlackenpartikeln unterschiedlicher Korngrößen, wobei eine kleinere Fraktion größerer Korngröße abgetrennt und in das Verfahren bei Schritt e1) rückgeführt werden kann.

In noch weiteren Ausführungsformen umfasst das Verfahren zur Aufbereitung von Verbrennungsschlacken einen Schritt, in dem eine Abtrennung von Eisen-Metallkomponenten vor Überführen des verbleibenden Verbrennungsschlackenstoffstroms in das mit Wasser beaufschlagbare Gefäß in Schritt f1) ausgeführt werden kann.

Ferner können nach Schritt f4) ein Schritt 1), in dem das in Schritt f) eingesetzten Wasser abgetrennt und in einen Hydrozyklon überführt wird, so dass Schwebstoffe aus dem Wasser abgetrennt werden können, und ein Schritt 2) des Auffangens der abgetrennten Schwebstoffe in einem Filter und Entwässern eines Filterrückstandes erfolgen. Der Filterrückstand kann erfindungsgemäß vorteilhaft als Abdeckmaterial, beispielsweise im Deponiebau, eingesetzt werden

Aus dem mit dem erfindungsgemäßen Verfahren aufbereiteten Verbrennungsschlackenmaterial wird ein Sekundärbaustoff bereitgestellt, der ein Produkt aus der Gruppe Sand, Splitt oder Edelsplitt ist. Dabei können der Sand eine Korngröße von 0 bis 2 mm, der Splitt eine Korngröße von 2 bis 32 mm, und der Edelsplitt eine Korngröße von 2 bis 22 mm aufweisen.

Ein Frostschutzschichtmaterial kann diesen Sekundärbaustoff enthalten.

### KURZBESCHREIBUNG DER FIGUREN

Der Bezug auf die Figuren dient der Unterstützung der Beschreibung und dem verbesserten Verständnis des Gegenstands der Erfindung. Es zeigt:

**Fig. 1** ein Verfahrensablaufschema des verallgemeinerten Aufbereitungsverfahrens über vier Stufen,

**Fig. 2** die erste Aufbereitungsstufe des Verfahrensablaufs aus Fig. 1,

**Fig. 3** die zweite Aufbereitungsstufe des Verfahrensablaufs aus Fig. 1,

**Fig. 4** die dritte Aufbereitungsstufe des Verfahrensablaufs aus Fig. 1,

**Fig. 6** die vierte Aufbereitungsstufe des Verfahrensablaufs aus Fig. 1.

### BESCHREIBUNG

Die vorliegende Erfindung schafft ein Verfahren zur Bereitstellung von Materialien, die als Sekundärbaustoffe geeignet sind, aus Schlacken, die aus der Verbrennung von Müll resultieren. Insofern sind die Sekundärbaustoffe, die als Produkte ebenfalls Gegenstand der Erfindung sind, recycelte und chemisch inerte Stoffe.

Um die erfindungsgemäßen Sekundärbaustoffe zu erzielen, umfasst das Verfahren eine Mehrzahl produktbezogener koppelbarer Aufbereitungsstufen. Diese können eine flexibel kombinierbare Abfolge von Verfahrensschritten umfassen, die jeweils auf das Aufgabematerial, das für den ersten Schritt bereitgestellt wird, oder das zur weiteren Aufbereitung als Zwischenprodukt einer Aufbereitungsstufe entsteht, bezogen sind. Entsprechend kann eine trockene als auch eine nasse, insbesondere eine nassmechanische Aufbereitung erfolgen.

Zum besseren Verständnis des Verfahrens sei erläutert, dass die Bezeichnungen "Erdbunker", "Zwischenbunker" und "Aufgabebunker" historisch entstandene Begriffe sind und daher so verwendet werden. Die sogenannten "Bunker" bezeichnen Materialaufgabevorrichtungen, die den Materialzufluss auf die Transportbänder überführen. In unterschiedlichen Aufbereitungsstufen unterscheiden sich die verschiedenen Bunker im Wesentlichen dadurch, dass die Aufgabehöhen aus verfahrenstechnischen Gründen unterschiedlich sind. Von den Bunkern aus gelangt das Schlackenmaterial über Förderbänder in die entsprechenden Aufbereitungsstationen. So schließt ein Erdbunker mit dem Gehniveau der Erdoberfläche der Aufbereitunsganlage ab, während ein Aufgabebunker aufgebockt ist und seine Befüllungsöffnung höher liegt.

Ebenso ergeben sich die nachfolgend angegebenen Korngrößen aus Praktikabilitätsgründen, da die auf dem Markt befindlichen Siebböden, die für die Durchführung des erfindungsgemäßen Verfahrens geeignet sind, das Abtrennen bestimmter Korngrößen vorsehen. Jeder einzelne der nachfolgenden Körnungswerte kann daher im Bereich von 0,1 bis 50 mm, zumindest jedoch um 1 bis 20 mm abweichen. Bei einer Abweichung der Größe einer Fraktion ergibt sich, dass die Nachbarfraktionen entsprechend angepasst werden. Wird beispielsweise eine im Beispiel einer Körnungsgröße von 0 bis 22 mm angegebene Fraktion durch Einsetzen eines Siebbodens mit Maschenweiten von 0 bis 25 mm ersetzt, so muss verstanden werden, dass die zurückbleibende Fraktion eine Körnung aufweist, die größer als 25 mm ist.

Der Begriff "Buntmetalle" wird gleichbedeutend mit Nicht-Eisen-Metallen benutzt; diese Metalle werden unterschieden von den umgangssprachlich als "V-Material" bezeichneten Edelstahl-Komponenten.

Komponenten, die als "Mineralik"abgetrennt werden, bezeichnen Bestandteile, die aus mineralischen Grundmaterialien, Steinen, Mauerwerk oder Beton stammen.

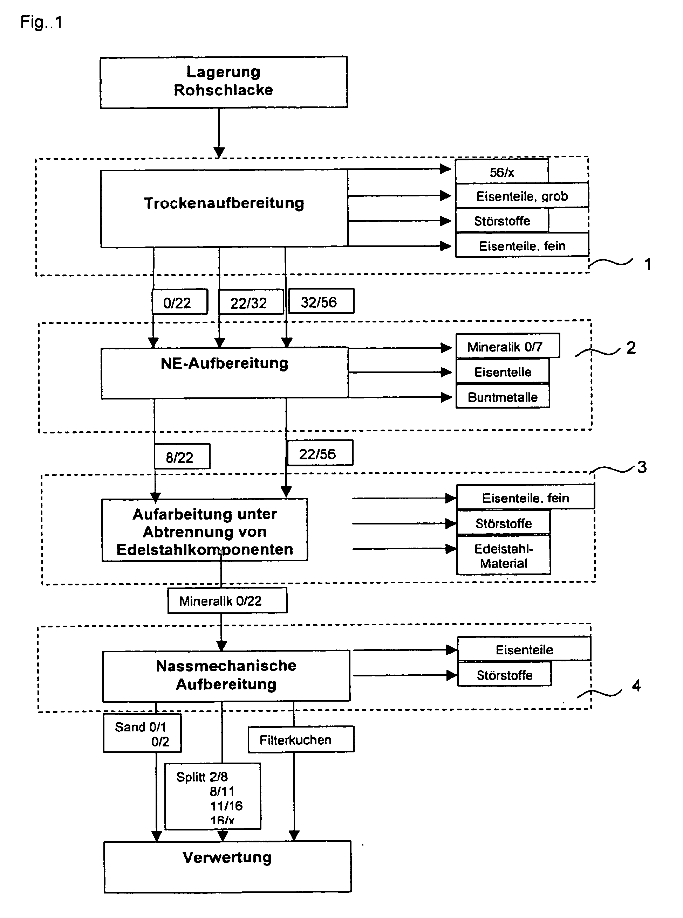

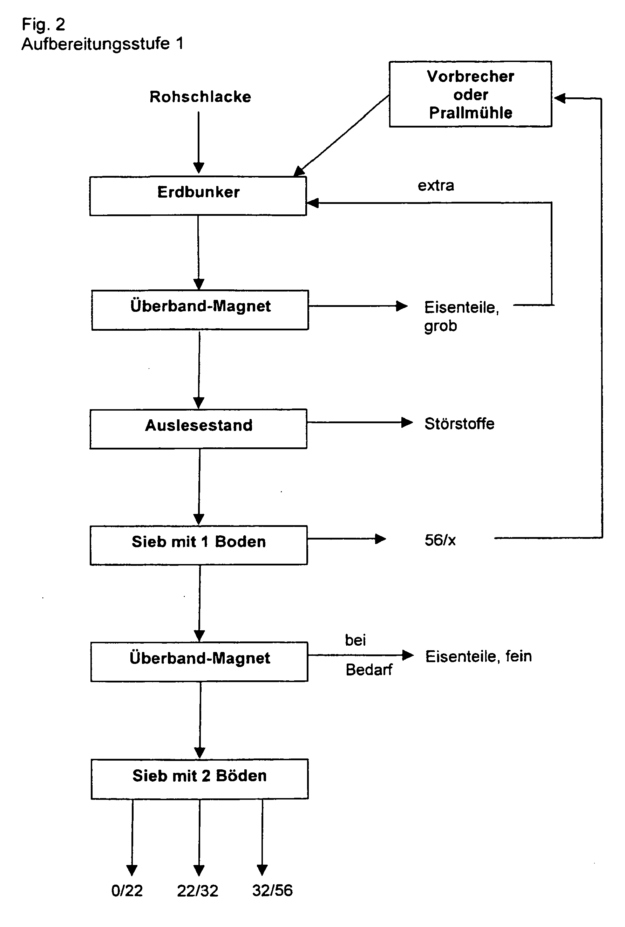

**Fig. 1** zeigt ein Verfahrensablaufschema des verallgemeinerten Aufbereltungsverfahrens über vier Aufbereitungsstufen, wobei die gealterte Rohschlacke über eine Trockenaufbereitungsstufe (wie in **Fig. 2** im Detail beispielhaft ausgeführt) zur Abtrennung von groben und feinen Eisen-Komponenten und von Störstoffen zunächst vorklassiert wird. Unter Störstoffen werden dabei die Stoffe verstanden, die nicht einer weiteren Metallaufarbeitung oder Mineralstoffaufarbeitung unterzogen werden können, beispielsweise inhomogene Verbrennungsrückstandagglomerate.

Die hier gezeigte Klassierung umfasst zunächst eine Abtrennung aller Schlackenstücke mit einer Körnung von über 56 mm, wobei diese Körnungsgröße lediglich ein Vorschlag ist, der sich auf gängige Sieblochgrößen bezieht. Selbstversländlich kann, wenn es dem Fachmann geeignet erscheint, auch Material mit größerer Körnung, etwa ab 60 mm oder kleinerer Körnung, bereits ab 50 mm aufwärts, abgetrennt werden, um dieses Material nach einer Nachzerkleinerung dem Prozess wieder zuzuführen.

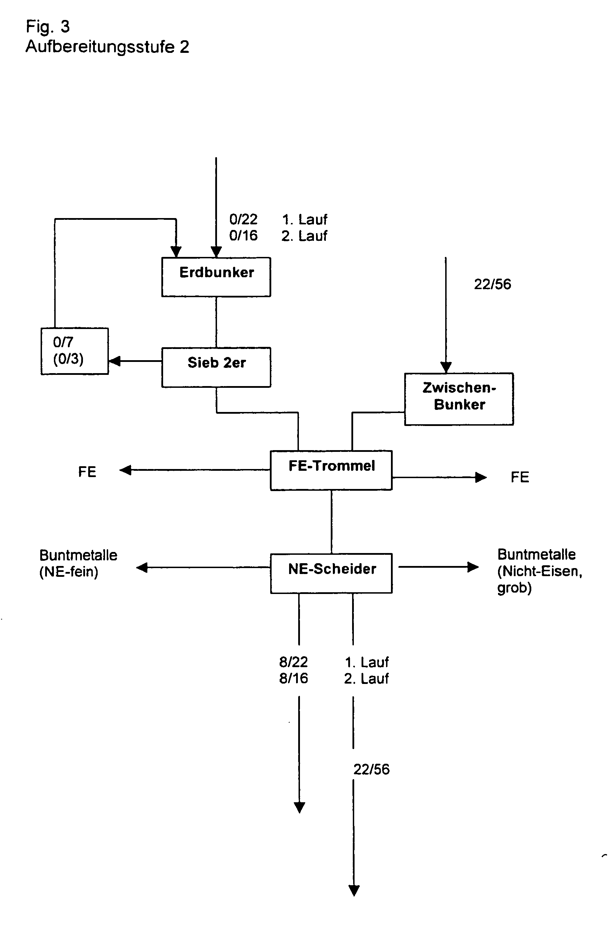

Die weitere Vorklassierung dieser Trockenaufbereitungsstufe ergibt drei Fraktionen unterschiedlicher Körnungsgrößen, die sodann einer zweiten Aufbereitungsstufe, detailliert dargestellt in **Fig. 3**, zur Abtrennung der Nichteisenkomponenten unterzogen werden.

Die Partikel mit der kleinsten Körnung, die aus dieser Vorklassierung hervorgehen, können dabei auf geeigneten Flächen zwischengelagert werden; ebenso können die beiden in zwei Durchläufen getrennt zu verarbeitenden Fraktionen größerer Korngrößen zwischengelagert werden.

In der zweiten Aufbereitungsstufe erfolgt eine erneute Abtrennung von Metallen, auch von Buntmetallen. Ferner kann durch eine Absiebung eine weitere kleinste Fraktion von Komponenten aus der durch Vorklassieren erhaltenen Fraktion mit vormals kleinster Körnung abgetrennt werden; Partikel im Bereich bis zu etwa 7 mm können so separiert werden. Selbstverständlich weiß der Fachmann, dass er die Anzahl der Siebläufe und die Körnungsgrößen nach Bedarf wählen kann.

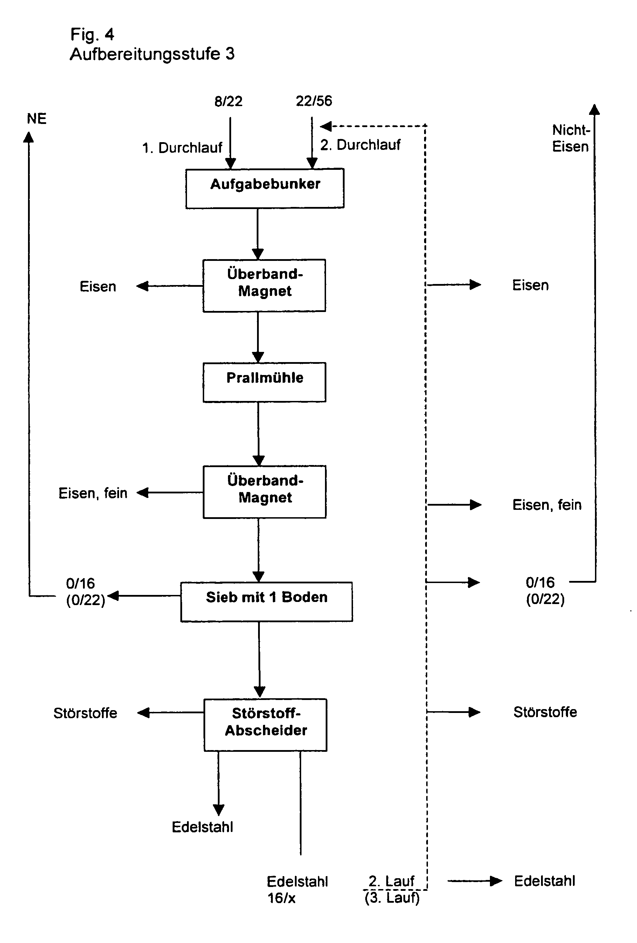

Eine weitere Aufbereitung des Schlackenmaterials erfolgt, indem die Verbliebenen Komponenten, die bei den vorstehend beispielhaft angegebenen Korngrößen im Bereich von 8 bis 22 und ab 22 bis 56 mm liegen, in getrennten Durchläufen erneut der Auslese metallischer Bestandteile durch bekannte Technologien unterzogen werden. Der ausführliche Verfahrensablauf dieser Aufbereitungsstufe ist in **Fig. 4** wiedergebeben. Erneut können auch händisch Störstoffe aus dem Materialstrom ausgelesen werden. Damit können wertvolle und recycelbare Stoffe wie Eisen und Buntmetalle in sortenreiner Form aus dem anfänglichen Gesamtschlackenstrom ausgesondert werden und als Wertstoffe weiterer Nutzung zugeführt werden.

Vorteilhaft erfolgt nun eine nassmechanische Aufbereitungsstufe, bei der das zur weiteren Verwertung vorgesehene Material durch unter Druck stehendes Wasser von Staub oder Feinanhaftungen befreit wird und damit bereits eine höhere Qualitätsstufe erreicht. Das staubfreie Material kann erneut mittels der bekannten Technologien der Abtrennung von Eisen und Störstoffen unterzogen werden, weiter können mittels bekannter Siebverfahren Schlackenkomponenten mit Kömungsgrößen abgetrennt werden, die als Sand oder Splitt klassifiziert werden. Sande und Splitte können wieder durch bekannte Siebvorrichtungen in Splittklassen und Sandklassen aufgeteilt werden, die hochwertige Produkte darstellen, welche als Sekundärbaustoffe geeignet sind.

Diese Produkte, so wie der aus der nassmechanischen Aufbereitung resultierende Filterkuchen, der als Zuschlagsmaterial für temporäre Oberflächenabdeckungen beispielsweise im Deponiebau geeignet ist, sind von Metallen und Störstoffen befreit und sind mineralisch homogen. Sie weisen keine nicht-aufbereiteten Schlackerückstände mehr auf, sind daher auch optisch ansprechend und genügen den hohen Anforderungen, die an Materialien zur Verwendung im Bau-oder im Straßenbauwesen gestellt werden.

Daher bietet das vorstehende ausgeführte Verfahren eine Möglichkeit verschiedene Teilfraktionen aus den ehemaligen Rohschlacken mit Größen von unter etwa 50 bis 60 mm an Stelle der bis dato üblichen Deponierung einer Weiterverwertung zuzuführen.

Kurz: Das vorstehend offenbarte Verfahren zur Aufbereitung von Müllverbrennungsschlacke schafft eine sortenreine, schadstoffarme Trennung der Schlacke in organische, mineralische, eisenmetallische und nichteisenmetallische Produkte und Produktgruppen. Damit werden Produkte bereitgestellt, die wirtschaftlich weiterverwendbar sind; etwa als recyclebare Metallfraktionen, mineralische Substitute in der Zementindustrie oder im Straßenbau als güteüberwachte Sekundärbaustoffe.

Material, das als Sekundärmaterial für Baustoffgemische verwendet und z. B. als Frostschutz- oder Tragschicht beim Straßenbau eingesetzt werden soll, muss den technischen Lieferbedingungen für die entsprechenden Anwendungen in Pflaster, Asphalt oder mit Gestein genügen, dabei sind die Sieblinienbereiche und Körnungsvorschriften, wie sie in den mit den entsprechenden technischen Lieferbedingungen gekoppelt sind, einzuhalten. Schließlich müssen aus Recyclingprozessen stammende Materialien eine Mindestgüte aufweisen, wenn sie entsprechend für die vorgenannten Anwendungen zum Einbau in Verkehrsflächen vorgesehen sind. Die Produkte, die mittels des erfindungsgemäßen Verfahrens erzeugt werden, erfüllen die Vorgaben der TL G SoB - StB unter Anwendung der TL Gestein - StB und der TL SoB - StB in den Kornklassen 0/32, 0/45, 0/56 und den Einbaukategorien RC - 1, RC - 2, RC - 3.

Produkte aus dem erfindungsgemäßen Verfahren, die als Zuschlag fürdie Herstellung von Beton dienen sollen, werden gemäß DIN EN 12620 / DIN 4226 -100 geprüft; soweit entsprechend hergestellte Produkte der Prüfung unterzogen wurden, konnte die Einhaltung dieser Normen gezeigt werden. Dasselbe gilt für aus dem erfindungsgemäßen Verfahren Material als Zuschlag für die Herstellung von Asphalt gemäß DIN EN 13043; Material, das aus dem erfindungsgemäßen Verfahren resultiert und als Bettungsmaterial unter Pflaster- und ähnlichen Schichten eingebaut werden soll, wird gemäß TL Pflaster - StB 06 und TL Gestein - StB 04 und der DIN EN 13285 (als Baustoffgemisch Splitt - Sand RC - Gemisch mit einer Körnung von 0/8 mm) hinsichtlich seiner Güte beurteilt und genügt den angegebenen Normen vollumfänglich. Damit ist es überraschend möglich, die mittels des erfindungsgemäßen Verfahrens aufgearbeiteten Schlacken, insbesondere die Schlackenkomponenten mit Körnungen im Bereich von bis zu 56 mm, die bis dato ohne weitere Verwendung auf Deponien endgelagert werden, aufzuarbeiten und zu qualifizierten Sekundärbaustoffen zu überführen. Dabei können diese Produkte, die insbesondere A- und B-Sande mit Körnungen von 0 bis 2 bzw. 0 bis 1 mm sowie Splitte mit Körnungen von 2 bis 8 mm, ab 8 bis 11 mm, ab 11 bis 16 mm und ab 16 mm umfassen, nunmehr auch in Frostschutzschichten und Schottertragschichten im Straßenbau eingesetzt werden.

Geeignete Frostschutzschichten und Schottertragschichten können Mischungen von Splitten und Sanden aus dem erfindungsgemäßen Verfahren gemäß beliebigen Mischungsverhältnissen sein, ohne dass die Qualität der Frostschutzschicht oder Schottertragschicht gemindert würde; durch die erfindungsgemäße Aufbereitung der aus Müllverbrennung oder aus Verbrennung von Bauwerksrückständen oder aus Biomasse entstehenden Schlacke ist sichergestellt, dass umweltgefährdende Stoffe aus den der weiteren Verwertung zukommenden Produktfraktionen abgetrennt worden sind. Als beispielsweise, geeignete Mischungsverhältnisse haben sich Verhältnisse von 10 Vol. % bis zu 30. Vol. der aus Schlacke gewonnenen Produkte zu 90 Vol % bis zu 70 Vol. % der regulären Baustoffe erwiesen.

In den **Figuren 2 bis 5** sind die zur Darstellung der Zielprodukte erforderlichen Verfahrensschritte im Detail, jedoch beispielhaft und ohne beschränkend sein zu wollen, ausgeführt.

Zunächst wird die Schlacke aus Hausmüllverbrennung, aus der Verbrennung biologischer Abfallstoffe, aus Baustoffverbrennung oder sonstiger Verbrennung altern gelassen: Die angelieferte Schlacke wird zunächst auf Halden zur Alterung zwischengelagert. Durch den Zutritt von Regen, Luftfeuchtigkeit bzw. kontrollierter manueller Befeuchtung klingen in diesem Zeitraum im Haldenkörper chemische und physikalische Reaktionsprozesse so weit ab, dass sich die Schlacke chemisch-mineralogisch in einem stabilen Zustand befindet. Damit während dieses Lagerprozesses keine belasteten Sickerwässer in den Untergrund dringen, muss die Zwischenlagerung auf einem abgedichteten Untergrund auf durch Trennwände unterteilten Flächen, beispielsweise in Lagerboxen erfolgen. Damit ist es möglich, Sickerwässer in Sammelbecken zu erfassen und aufzubereiten oder der Schlackehalde zurückzuführen. Der Alterungszeitraum beträgt je nach Rohschlackenbeschaffenheit vorteilhaft 2 bis 3 Monate oder mehr.

**Fig. 2** beschreibt die Trockenaufarbeitung, nachdem die Rohschlacke in den Erdbunker übergeben wurde, von dem aus das Schlackenmaterial über Förderbänder der Aufarbeitung zugeführt wird.

In der ersten Aufbereitungsstufe wird die abgelagerte Rohschlacke trockenmechanisch aufbereitet. Dazu werden nach Auslesen von großem unverbrannten Material während einer Bandsortierung mittels Überbandmagneten aus dem Materialstrom Eisenstücke aussortiert; auch andere großstückige Metalle werden separiert. Die soweit vorsortierte Schlacken-Masse wird einer Siebvorrichtung zugeführt, die eine erste Fraktion an partikulärem Material abtrennt. Die Siebvorrichtung kann eine mit nur einem Boden bestückte Siebanlage sein; es hat sich als praktikabel bei gängigen Sieb-Sets erwiesen - und ist auch im Hinblick auf die Partikelgröße der verbleibenden Schlacke wünschenswert - Partikel mit einer Körnung von über 56 mm abzutrennen und einer Zerkleinerung zuzuführen. Dazu kann ein Vorbrecher bzw. die Prallmühle herangezogen werden. Das so zerkleinerte Material kann dem trockenmechanischen Aufbereitungsprozess wieder zugeführt werden.

Ein weiterer Schritt der ersten Aufbereitungsstufe umfasst gegebenenfalls das erneute magnetische Abtrennen von Eisenpartikeln. Dies kann mittels Überbandmagnet geschehen. Die nachfolgende Siebstation klassiert den Materialstrom in weitere Fraktionen auf; als geeignet hat sich eine Klassierung in drei Fraktionen erwiesen. Diese Fraktionen können in einer ersten Fraktion beispielsweise Korngrößen von 0 bis 22 mm, in einer zweiten Fraktion beispielsweise Korngrößen ab 22 bis 32 mm und in einer dritten Fraktion Korngrößen von 32 bis 56 mm enthalten. Diese drei Fraktionen, die als Feinfraktion, Mittelfraktion und Grobfraktion definiert werden können, können selbstverständlich auch anders eingeteilt werden; so können die Korngrößen der drei Fraktionen auch von 0 bis 15 mm (Feinfraktion), von 15 bis 35 mm (Mittelfraktion) und von 35 mm bis 56 mm (Grobfraktion) liegen; auch die in der vorgenannten ersten Abtrennung genannte Korngröße von 56 mm kann variiert werden. Die Fraktion mit der Körnung von 32 bis 56 mm kann ebenfalls durch eine Prallmühle oder einen Kegelbrecher nachzerkleinert und stromaufwärts dem Verfahren wieder aufgegeben werden.

Statt dreier Fraktionen kann die Siebung auch so ausgeführt werden, dass die Mittelfraktion und die Grobfraktion zusammengefasst werden, so dass also nur zwei Fraktionen mit Körnungen von 0 bis 22 mm und von 22 bis 56 mm der nunmehr in **Fig. 3** beschriebenen Aufarbeitung unterzogen werden.

In der nun erfolgenden zweiten Aufbereitungsstufe werden die Fraktionen mit Körnungen von 0 bis 22 mm und die Mittel- und Grobfraktion weiter aufgearbeitet: Die Fraktion von 0 bis 22 mm wird über den Erdbunker aufgegeben und mittels Gurtförderern einer Siebstation, die als Eindecker ausgestaltet ist, zugeführt. Dort wird die mineralische Fraktion, die Körnungsbereiche von 0 bis 8 oder 0 bis 4 mm entsprechend auch über mehrere Siebläufe erhältlich, abgetrennt. Dieses abgetrennte Material kann z. B. im Deponiebau zur Verwendung kommen.

Die verbleibende Feinfraktion sowie die Mittel- und Grobfraktion werden über einen Aufgabebunker mittels Fördereinrichtungen und Abscheidevorrichtungen zugeführt; es kann sich hier um Wirbelstrom-Abscheider wie Neodym- oder Samarium-Trommelmagnete handeln. Damit wird bewirkt, dass feine Eisenpartikel, auch partikuläre Anhaftungen mit Eisen und mit nichtmagnetischen Edelstahlkomponenten wie etwa von Löffeln, Gabeln, Schrauben, Metallstäben sortenrein nacheinander, abgetrennt werden können. Nachdem die Abscheidung von Eisen- und Buntmetallen erfolgt ist, wird die verbleibende mineralische Fraktion mit einer Körnung von 8 bis 22 mm, wie beispielhaft ausgewählt, unmittelbar der dritten Aufbereitungsstufe zugeführt, die in Fig. 4 dargestellt ist, oder sie wird zur Ergebnisoptimierung in Bezug auf die Metallentfrachtung nochmals der zweiten Aufarbeitungsstufe unterworfen.

Für die Fraktionen Mittel- und Grobfraktion im obigen Verfahrensschritt liegt der Unterschied darin, dass die Aufgabe in die Vorrichtungen zur Metallabscheidung über den Zwischenbunker erfolgt und der Schritt der Siebung entfällt.

In zwei Durchläufen können nun getrennt voneinander die Fraktionen mit Körnungen von 8 bis 22 und ab 22 bis 56 mm des verbliebenen Schlackenmaterialstromes der weiteren, verfeinerten Aufarbeitung wie in **Fig. 4** gezeigt unterworfen werden.

Nach der Materialaufgabe der einzelnen Fraktionen, die stets nacheinander verarbeitet werden, aus dem Aufarbeitungsschritt 2, sortiert ein Überbandmagnet eventuell noch vorhandene Eisen-Anteile aus. Selbstverständlich können statt der genannten Überbandmagneten im gesamten Verfahren auch andere Abtrennvorrichtungen für magnetische Metalle verwendet werden. Danach schließt eine Prallmühle den Stoffstrom weiter auf und ein weiterer Überbandmagnet entfernt feinere Eisen-Anteile. Es ist zu bemerken, dass durch die Prallmühle wieder zerkleinertes Material bereitgestellt wird, so dass nachfolgend wieder ein breiteres Körnungspektrum zur Verfügung steht. Die anschließende Siebstation mit einem Boden trennt eine überwiegend mineralische Fraktion ab; eine Körnung von 0 bis 16 oder von 0 bis 22 mm kann hierfür gewählt werden. Diese abgesiebte Fraktion kann bei Bedarf wieder über den Aufgabebunker dem Aufarbeitungsschritt 2 zugeführt werden. Anschließend erfolgt durch einen Störstoffabscheider ("Staubsauger") mittels Absaugung das Entfernen von Störstoffen nichtmineralischer Art. Es bleiben nichtmagnetische Fraktionen, also Edelstahlmaterial und entsprechende mineralische Körnungsfraktionen mit Größen im Bereich von beispielsweise 8 - 16 mm oder größer als 16 mm zur weiteren Verwertung übrig.

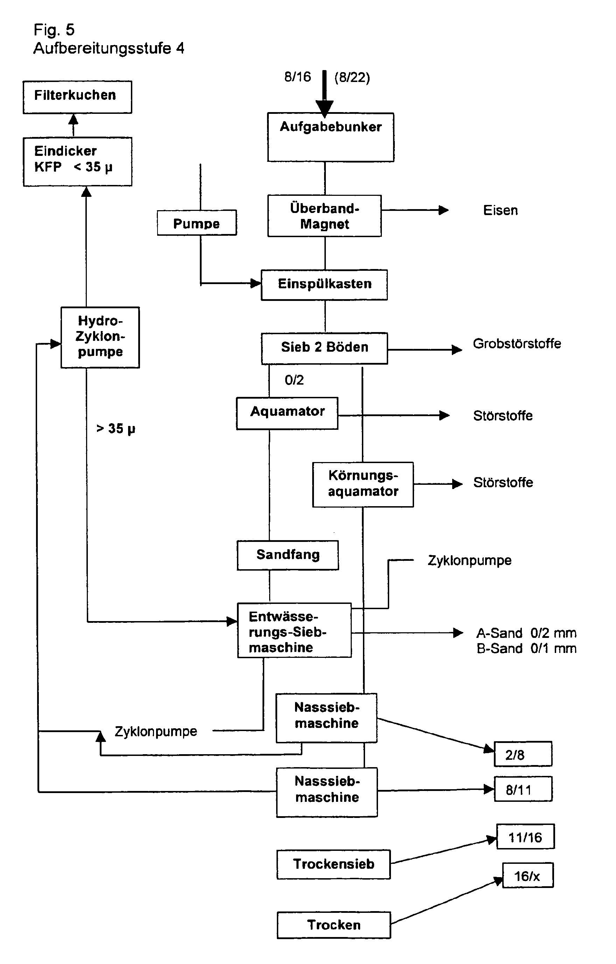

Der in Fig. 5 gezeigte Aufarbeitungsschritt zeigt die nassmechanische Aufarbeitung. Die Nassaufbereitung zur Veredlung der Schlacken ist nach den geltenden Vorschriften (z.B. TL Gestein), in die Prozesskette integrierbar. Hierbei werden Fraktionen mit gewünschten Korngrößen wie etwa 8 bis 16 mm oder 8 bis 22 mm, um beispielhaft zwei zu nennen, aus der trockenen Aufbereitung einem mit Wasser als Transportmedium betriebenen Aufbereitungsverfahren unterzogen.

Dabei wird das Schlackenmaterial nach dem Aufgeben des Produktes über einen Aufgabebunker mittels Fördermitteln wie etwa einem Gurtförderer weitertransportiert. Ein Überbandmagnet entfernt optional an dieser Stelle erneut metallische Teile. Danach gelangt der Materialstrom durch einen Einspülkasten, in dem es gründlich mit Wasser bebraust wird, auf eine Siebvorrichtung. Das Bebrausen kann etwa mittels unter Druck von etwa 2 bar stehendem Wasser, das aus Düsen auf entsprechende Ober-und Unterdecks des Einspülkastens gerichtet wird, erfolgen. Vorteilhaft wird der Wasserstrahl von unten nach oben durch das Sieb gerichtet. Die Siebvorrichtung dient der Entfernung weiterer grober Störstoffe; es kann sich beispielsweise bei der Siebvorrichtung um eine als Zweidecker gestaltete Ellipsen-Luft-Aufstrommaschine handeln. Das Entfernen der groben Störstoffe erfolgt durch Lufteintrag mit einem Druck von etwa 0,2 bis 0,5 bar über Atmosphärendruck.

Aus dem Sieb gelangt eine Fraktion mit einer Körnung von 0 bis 2 mm in einen Hydroabscheider oder auch Aquamator zur Sandabscheidung; über einen Sandfang gelangt der abgeschiedene Sand auf eine Entwässerungssiebmaschine. Hier werden verschiedene Fraktionen Sande abgetrennt, beispielsweise Fraktionen mit Körnungen von 0 bis 1 mm (B-Sand) und von 0 bis 2 mm (A-Sand).

Der weitere Volumenstrom, der aus dem obigen nach dem Einspülkasten angeordneten Sieb mit kommt, passiert in Reihe angeordnete Nasssiebmaschinen. Dort werden Fraktionen mit Körnungen von 2 bis 8 mm, ab 8 bis 11 mm, ab 11 bis 16 mm und ab 16 mm abgetrennt. Diese Körnungsgrößenwahl ist selbstverständlich nicht bindend. Das Material mit einer Körnung von über 16 mm kann über eine Prallmühle weiter zerkleinert und dem Kreislauf der nassmechanischen Aufbereitung erneut zugeführt werden.

Das im Prozess als Wasch-und Transportmedium verwendete Wasser wird aufgefangen und durch einen Hydrozyklon getrennt, wobei Partikel mit einer Partikelgröße von 35 µm bis 63 µm getrennt. Die Partikel, die kleiner als 35 µm bis 63 µm sind, werden in einem Eindicker durch Zugabe von Flockungsmitteln einem Absetzvorgang zugeführt. Das abgesetzte Medium wird beispielsweise durch eine Kammerfilterpresse (KFP) entwässert. Der entstehende Filterkuchen kann beispielsweise als Abdichtmaterial im Deponiebau verwertet werden. Das aus dem Eindicker kommende geklärte Wasser wird dem Wasserkreislauf wieder zugeführt. Die Anteile, die größer als die Partikel im Bereich von 35 µm bis 63 µm sind, werden dem Prozess vor Abtrennung der zwei Sandfraktionen zugeführt. Das gereinigte Wasser wird dem Wasserkreislauf des Verfahrens wieder zugeführt.

So werden nach der vorstehenden Aufarbeitungsverfahren für Schlacke nahezu metallfreie Sande und Splitte erhalten, deren Körnungen durch geschickte Siebauswahl frei wählbar sind, so dass Sande, Splitte und Schotter mit geeigneten Qualitäten bereitgestellt werden können, um für die Verwendung im Straßenbau oder als Zuschlagsstoffe für Beton und bei einer Vielzahl anderer Anwendungen geeignet zu sein.

## Patentansprüche

1. Verfahren zur Aufbereitung von Verbrennungsschlacken, **umfassend die Schritte:**
a) Bereitstellung eines Verbrennungsschlackenstoffstromes,
b) Trockenaufarbeitung der Verbrennungsschlacke, umfassend eine Abtrennung von Eisen-Metallkomponenten und eine Abtrennung von Störstoffen, wobei die Metallkomponenten und die Störstoffe getrennt voneinander aus dem Verbrennungsschlackenstoffstrom abgetrennt werden, und umfassend ein Vorklassieren des verbliebenen Verbrennungsschlackenstoffstromes in zumindest zwei Fraktionen an Schlackenpartikeln unterschiedlicher Korngrößen,
c) Aufarbeitung der zumindest zwei Fraktionen getrennt voneinander, wobei
1.) eine kleinere der beiden Fraktionen unmittelbar einer weiteren Klassierung in zumindest zwei Fraktionen an Schlackenpartikeln unterschiedlicher Korngrößen unterzogen wird, und wobei eine hieraus resultierende Fraktion größerer Körnung einer Abtrennung von Eisen-Metallkomponenten und einer nachfolgenden Abtrennung von Nicht-Eisen-Metallkomponenten unterzogen wird,
2.) eine größere der beiden Fraktionen einer Abtrennung von Eisen-Metallkomponenten und einer nachfolgenden Abtrennung von Nicht-Eisen-Metallkomponenten unterzogen wird, und umfassend
d) Klassieren des verbliebenen Verbrennungsschlackenstoffstromes aus den Schritten c1) und c2) in zumindest zwei Fraktionen an Schlackenpartikeln unterschiedlicher Korngrößen;
e) Aufarbeitung der zumindest zwei Fraktionen aus Schritt d) getrennt voneinander umfassend eine Schrittfolge
1) Abtrennung von Eisen-Metallkomponenten,
2) Nachzerkleinerung des nach der vorstehenden Abtrennung von Eisen-Metallkomponenten verbleibenden Verbrennungsschlackenstoffstromes,
3) Abtrennung von Eisen-Metallkomponenten,
4) Abtrennung von Störstoffen und/oder Abtrennung von Nicht-Eisen-Metallkomponenten,
f) Nassaufbereitung des aus Schritt e4) verbleibenden Verbrennungsschlackenstoffstroms, wobei der Stoffstrom in ein Gefäß überführt wird, umfassend eine Schrittfolge
1) Beaufschlagen des Verbrennungsschlackenstoffstroms mit unter Druck stehendem Wasser,
2) Abtrennen von Störstoffen und Nassklassieren des Verbrennungsschlackenstoffstroms in zumindest zwei Fraktionen an Schlackenpartikeln unterschiedlicher Korngrößen,
3) Getrennt voneinander Unterziehen der zwei Fraktionen an Schlackenpartikeln einem Hydroabscheideverfahren zur Abtrennung von Störstoffen und
4) Nassklassieren der beiden Fraktionen an Schlackenpartikeln getrennt voneinander,
wobei aus einer kleineren der beiden Fraktionen zumindest zwei Fraktionen Sand unterschiedlicher Korngrößen abgetrennt werden und wobei aus einer größeren der beiden Fraktionen zumindest drei, vorzugsweise vier Fraktionen an Schlackenpartikeln abgetrennt werden.

2. Verfahren nach Anspruch 1, **umfassend:**
Klassieren des nach Schritt e3) verbleibenden Verbrennungsschleckenstoffstroms in zumindest zwel Fraktionen an Schlackenpartikeln unterschiedlicher Korngrößen und Abtrennen und Rückführen einer kleineren Fraktion größerer Korngröße in das Verfahren bei Schritt e1).

3. Verfahren nach Anspruch 1 oder 2 **umfassend:**
Ausführen einer Abtrennung von Eisen-Metallkomponenten vor Überführen des verbleibenden Verbrennungsschlackenstoffstroms in das mit Wasser beaufschlagbare Gefäß In Schritt f1).

4. Verfahren nach zumindest einem der vorstehenden Ansprüche, **umfassend:**
1) Abtrennen des in Schritt f) eingesetzten Wassers nach Schritt f4) und Überführen des Wassers in einen Hydrozyklon zur Abtrennung von Schwebstoffen aus dem Wasser,
2) Auffangen der abgetrennten Schwebstoffe in einem Filter und Entwässern eines Filterrückstandes.

## Claims

1. A method for treating incineration slags, **comprising the steps:**
a) providing an incineration slag material flow,
b) dry processing of the incineration slag, comprising a separation of iron-metal components and a separation of extraneous materials, wherein the metal components and the extraneous materials are separated separately from one another from the incineration slag material flow, and comprising a preliminary classification of the remaining incineration slag material flow into at least two fractions of slag particles having different grain sizes,
c) processing the at least two fractions separately from one another,
wherein
1.) a smaller one of the two fractions is directly subjected to a further classification into at least two fractions of slag particles having different grain sizes, and wherein a fraction resulting herefrom having a larger grain size is subjected to a separation of iron-metal components and to a subsequent separation of non-iron-metal components,
2.) a larger one of the two fractions is subjected to a separation of iron-metal components and to a subsequent separation of non-iron-metal components, and comprising
d) classifying the remaining incineration slag material flow from steps c1) and c2) into at least two fractions of slag particles having different grain sizes;
e) processing the at least two fractions from step d) separately from one another, comprising a step sequence
1) separating iron-metal components,
2) subsequent comminution of the incineration slag material flow, which remains after the aforesaid separation of iron-metal components,
3) separating iron-metal components,
4) separating extraneous materials and/or separating non-iron-metal components,
f) wet processing of the incineration slag material flow, which remains from step e4), wherein the material flow is transferred into a vessel, comprising a step sequence
1) applying pressurized water to the incineration slag material flow,
2) separating extraneous materials and post-classification of the incineration slag material flow into at least two fractions of slag particles having different grain sizes,
3) subjecting the two fractions of slag particles separately from one another to a hydro-separating process for separating extraneous materials and
4) post-classification of the two fractions of slag particles separately from one another,
wherein at least two fractions of sand having different grain sizes are separated from a smaller one of the two fractions and wherein
at least three, preferably four fractions of slag particles are separated from a larger one of the two fractions.

2. The method according to claim 1, **comprising:**
classifying the incineration slag material flow, which remains after step e3), into at least two fractions of slag particles having different grain sizes and
separating and returning a smaller fraction having a larger grain size into the method at step e1),

3. The method according to claim 1 or 2, **comprising:**
carrying out a separation of iron-metal components prior to transferring the remaining incineration slag material flow into the vessel, which can be loaded with water, in step f1).

4. The method according to at least any one of the preceding claims, **comprising:**
1) separating the water used in step f) after step f4) and transferring the water into a hydrocyclone for separating particulate matter from the water,
2) collecting the separated particulate matter in a filter and draining a filter residue.

## Revendications

1. Procédé de préparation de scories de combustion, **comprenant les étapes de :**
a) mise à disposition d'un courant de substances de scorie de combustion,
b) traitement à sec des scories de combustion, comprenant une séparation de composants métalliques ferreux et une séparation de substances parasites, dans lequel les composants métalliques et les substances parasites sont séparés du courant de substances de scorie de combustion séparément les uns des autres, et comprenant un classement préalable du courant de substances de scorie de combustion restant en au moins deux fractions de particules de scorie de granulométries différentes,
c) traitement des au moins deux fractions séparément l'une de l'autre,
dans lequel
1.) une fraction la plus petite des deux est soumise directement à un autre classement en au moins deux fractions de particules de scorie de granulométries différentes, et dans lequel une fraction en résultant de granulométrie supérieure est soumise à une séparation de composants métalliques ferreux et une séparation subséquente de composants métalliques non ferreux,
2.) une fraction la plus grande des deux est soumise à une séparation de composants métalliques ferreux et une séparation subséquente de composants métalliques non ferreux, et comprenant
d) classement du courant de substances de scorie de combustion restant provenant des étapes c1) et c2) en au moins deux fractions de particules de scorie de granulométries différentes ;
e) traitement des au moins deux fractions provenant de l'étape d) séparément l'une de l'autre comprenant une succession d'étapes
1) séparation de composants métalliques ferreux,
2) broyage ultérieur du courant de substances de scorie de combustion restant après la séparation précédente de composants métalliques ferreux,
3) séparation de composants métalliques ferreux,
4) séparation de substances parasites et/ou séparation de composants métalliques non ferreux,
f) lessivage du courant de substances de scorie de combustion restant de l'étape e4), dans lequel le courant de substances est transféré dans un récipient, comprenant une succession d'étapes
1) sollicitation du courant de substances de scorie de combustion avec de l'eau sous pression,
2) séparation de substances parasites et classement humide du courant de substances de scorie de combustion en au moins deux fractions de particules de scorie de granulométries différentes,
3) soumission séparée l'une de l'autre des deux fractions de particules de scorie à un procédé d'extraction hydraulique pour la séparation de substances parasites et
4) classement humide des deux fractions de particules de scorie séparément l'une de l'autre,
dans lequel au moins deux fractions de sable de granulométries différentes sont séparées d'une fraction la plus petite des deux et dans lequel au moins trois, de préférence quatre fractions de particules de scorie sont séparées d'une fraction la plus grande des deux.

2. Procédé selon la revendication 1, **comprenant :**
classement du courant de substances de scorie de combustion restant après l'étape e3) en au moins deux fractions de particules de scorie de granulométries différentes, et séparation et recyclage d'une fraction la plus petite de granulométrie supérieure dans le procédé à l'étape e1).

3. Procédé selon la revendication 1 ou 2, **comprenant :**
réalisation d'une séparation de composants métalliques ferreux avant le transfert du courant de substances de scorie de combustion restant dans le récipient pouvant être sollicité avec de l'eau à l'étape f1).

4. Procédé selon au moins une des revendications précédentes, **comprenant :**
1) séparation de l'eau utilisée à l'étape f) après l'étape f4) et transfert de l'eau dans un hydrocyclone pour la séparation des matières suspendues de l'eau,
2) recueil des matières suspendues séparées dans un filtre et déshydratation d'un résidu de filtration.
